(19) Europäisches Patentamt
European Patent Office
Office européen des brevets

(11) **EP 3 594 480 B1**

(12) **EUROPÄISCHE PATENTSCHRIFT**

(45) Veröffentlichungstag und Bekanntmachung des Hinweises auf die Patenterteilung:
**27.04.2022   Patentblatt 2022/17**

(21) Anmeldenummer: **19184471.1**

(22) Anmeldetag: **04.07.2019**

(51) Internationale Patentklassifikation (IPC):
*F02D 41/00* $^{(2006.01)}$        *F02D 41/10* $^{(2006.01)}$
*F02B 37/24* $^{(2006.01)}$        *F02D 41/14* $^{(2006.01)}$

(52) Gemeinsame Patentklassifikation (CPC):
**F02D 41/0007; F02B 37/24; F02D 41/10;
F02D 41/1448;** F02D 2200/0406; F02D 2250/34;
Y02T 10/12

(54) **VERFAHREN ZUR STEUERUNG EINES AUFLADUNGSSYSTEMS**

METHOD FOR CONTROLLING A CHARGING SYSTEM

PROCÉDÉ DE COMMANDE D'UN SYSTÈME DE CHARGE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **11.07.2018   DE 102018211538**

(43) Veröffentlichungstag der Anmeldung:
**15.01.2020   Patentblatt 2020/03**

(73) Patentinhaber: **Volkswagen AG
38440 Wolfsburg (DE)**

(72) Erfinder:
• **Hübner, Matthias
  38104 Braunschweig (DE)**
• **Gebauer, Stefan
  38440 Wolfsburg (DE)**

(56) Entgegenhaltungen:
EP-A1- 3 078 833        DE-A1-102014 226 771
US-A- 5 228 292        US-A1- 2015 275 791
US-B1- 6 718 767

**Beschreibung**

Die Erfindung betrifft ein Verfahren und eine Steuerung zum Steuern eines Aufladungssystems für eine Verbrennungskraftmaschine.

Allgemein sind Aufladungssysteme für Verbrennungskraftmaschinen, insbesondere im Kraftfahrzeugbereich, bekannt, um den Ladedruck in den Zylindern der Verbrennungskraftmaschine zu erhöhen, so dass mehr und höher verdichtete Luft für die Verbrennung einer erhöhten Kraftstoffmenge zur Verfügung steht und so eine Leistungssteigerung der Verbrennungskraftmaschine (VKM) erreicht wird.

Zur Erhöhung des Ladedrucks sind beispielsweise Turbolader und Kompressoren bekannt. Turbolader umfassen einen Verdichter und sie können entweder mit einem eigenen Antrieb versehen sein, der mechanisch mit dem Verdichter gekoppelt ist (z.B. ein Elektromotor), oder sie werden mechanisch mit einer Turbine gekoppelt, die mit dem Abgas der VKM angetrieben wird.

Solche Abgasturbolader sind inzwischen die am weitesten verbreitete Lösung im Kraftfahrzeugbereich, um den Ladedruck zu erhöhen. Moderne Abgasturbolader sind zur verbesserten Leistungssteuerung mit einem Bypass-Ventil, auch "Waste Gate" genannt, und/oder mit variabler Turbinengeometrie ausgestattet, die verstellbare, feste Leitschaufeln aufweisen, mit denen der wirksame Strömungsquerschnitt verringert oder erweitert werden kann. Beim Verstellen des Anstellwinkels der Leitschaufeln lässt sich der Gasdurchsatz verändern. Typischerweise wird der Anstellwinkel der Leitschaufeln so geregelt bzw. gesteuert, dass bei wenig Gasdurchsatz und hohem Leistungsbedarf die Leistung des Turboladers durch Verringerung des Strömungsquerschnitts erhöht und bei hohem Gasdurchsatz und niedrigem Leistungsbedarf durch Vergrößerung des Strömungsquerschnitts verringert wird. Damit lässt sich letztlich der Ladedruck, mit dem die Luft zur Verbrennung in den Zylinder geschoben wird, erhöhen oder verringern. Dieser Ladedruck ist eine der maßgeblichen Faktoren für das abrufbare Leistungspotential der Verbrennungskraftmaschine.

Aus der DE 10 2008 005 121 A1 ist ein Verfahren bekannt, bei dem die variable Turbinengeometrie (VTG; verstellbare Leitschaufeln) so eingestellt wird, dass die Turbine einen vorgegebenen Durchsatz bereitstellt.

Aus der EP 1 178 192 A2 ist es auch bekannt, die VTG in Abhängigkeit von anderen Betriebsparametern der Verbrennungskraftmaschine (z.B. ein Dieselmotor) zu steuern. Solche Parameter können die Drehzahl, der Ölverbrauch bzw. die Kühlwassertemperatur oder andere Größen sein. DE 10 2008 063 935 A1 betrifft ein Verfahren bei dem für einen transienten Betriebszustand (positiver Lastsprung) prädizierte Werte für den Ladedruck und den Abgasgegendruck mit entsprechenden Sollwerten verglichen werden und zugehörige Dämpferimpulse berechnet werden, die einen Ausgangsdämpferimpuls ergeben, aus dem ein Ansteuersignal (Vorsteuer-Tastverhältnis) zur Einstellung der VTG ermittelt wird.

Aus der DE 10 2014 210 026 A1 ist es auch bekannt, das Aufladungssystem in Abhängigkeit von einem Soll-Ladedruck und einer ermittelten Ladedruckaufbauanpassung zu steuern. Ein anderes Verfahren zur Anpassung eines Ist-Ladedrucks an einen Soll-Ladedruck mittels Verstellen der Turbinengeometrie (dort: Drehschaufeln) ist aus der DE 10 2008 005 121 A1 bekannt. Damit sollen Wirkungsgradstreuungen verhindert werden.

US 5 228 292 A betrifft ein Verfahren zur Steuerung eines Aufladungssystems mit einer Aufladungsstufe für eine Verbrennungskraftmaschine, wobei die Aufladungsstufe einen Verdichter und eine Turbine umfasst und die Turbine mittels einer VTG-Ansteuerung einstellbar ist, wobei das Verfahren nicht das VTG Stellkriterium gemäß der erfindungsgemäßen Beziehung ermittelt.

Bei den bekannten Lösungen kann jedoch das Problem bestehen, dass die Anfahrperformance nicht optimal einstellbar ist. Bei diesen bekannten Lösungen wird die Ansteuerung eines Turbinen-Stellglieds (Waste Gate-Ventil und/oder VTG) verwendet, während für den Ermittlungsteil auf der Abgasseite (vor und hinter der Turbine) nur Soll-Zustandsgrößen verwendet werden. Diese Größen können jedoch auch für die Bildung des effektiven Motormoments bzw. der verfügbaren Leistung aufgrund der Ladungswechselverluste wesentlich sein.

Auch wenn aus dem Stand der Technik grundsätzlich Verfahren und Steuersysteme zur Einstellung eines Aufladungssystems bekannt sind, ist es Aufgabe der vorliegenden Erfindung, ein verbessertes Verfahren zum Steuern eines solchen Aufladungssystems und eine entsprechende Steuerung zum Steuern eines solchen Aufladungssystems zur Verfügung zu stellen. Diese Aufgabe wird durch das erfindungsgemäße Verfahren nach Anspruch 1, die Steuerung nach Anspruch 12 eine Verbrennungskraftmaschine nach Anspruch 13 und das Kraftfahrzeug nach Anspruch 14 gelöst.

Nach einem ersten Aspekt stellt die vorliegende Erfindung ein Verfahren zur Steuerung eines Aufladungssystems mit einer Aufladungsstufe für eine Verbrennungskraftmaschine gemäß Anspruch 1.

Nach einem zweiten Aspekt stellt die vorliegende Erfindung eine Steuerung für ein Aufladungssystem für eine Verbrennungskraftmaschine bereit, wobei die Steuerung dazu eingerichtet ist, das Verfahren nach dem ersten Aspekt auszuführen.

Nach einem dritten Aspekt stellt die vorliegende Erfindung eine Verbrennungskraftmaschine mit einem Aufladungssystem mit einer Aufladungsstufe bereit, wobei die Aufladungsstufe einen Verdichter und einen Antrieb aufweist, und mit einer Steuerung nach dem zweiten Aspekt. Nach einem vierten Aspekt stellt die vorliegende Erfindung ein Kraftfahrzeug mit einer Verbrennungskraftmaschine nach dem dritten Aspekt bereit.

Weitere vorteilhafte Ausgestaltungen der Erfindung ergeben sich aus den Unteransprüchen und der folgenden Beschreibung bevorzugter Ausführungsbeispiele der vorliegenden Erfindung. Wie eingangs erwähnt sind Aufladungssysteme bekannt, insbesondere mit einem Abgasturbolader mit variabler Turbinengeometrie (VTG) und/oder mit einem Wastegate (wenigstens einem Bypass-Ventil). Die Leitschaufeln des Abgasturboladers können typischerweise mit unterschiedlichen Geschwindigkeiten verändert werden. Das bedeutet, die Strömungsgeschwindigkeit wird schnell erhöht, wenn der bereitgestellte Ladedruck stark erhöht werden soll, um beispielsweise einem Sprung der Leistungs- oder Drehmomentanforderung (deutlicher Beschleunigungswunsch) an die Verbrennungskraftmaschine gerecht zu werden.

Dabei hat sich gezeigt, dass ein starkes (schnelles) Zuziehen der Leitschaufeln typischerweise auch zu einem hohen Abgasgegendruck und damit zu Ladungswechselverlusten führt, was wiederum dem effektiven Momentenaufbau der Verbrennungskraftmaschine entgegenwirkt. Dieser Zusammenhang ist dadurch erklärbar, dass das effektive Motormoment für die Antriebskraft am Rad (und damit die Beschleunigung eines Kraftfahrzeugs) entscheidend ist. Das effektive Motormoment entspricht der Differenz zwischen dem inneren Motormoment und einem Verlustmoment. Das Verlustmoment umfasst Ladungswechselverluste, Nebenaggregatverbräuche und Reibung.

Dabei sind die Ladungswechselverluste näherungsweise proportional zum Spülgefälle (Druckdifferenz) zwischen dem Abgasgegendruck an der Auslassseite und dem Ladedruck an der Einlassseite des Aggregats. Dies wurde aufgrund der Betrachtung eines Kreisprozesses einer realen Verbrennungskraftmaschine ermittelt.

Um das effektive Motormoment bzw. die Fahrzeugbeschleunigung zu erhöhen, stehen zwei Anteile zur Disposition, die über die Einstellung der VTG-Position beeinflussbar sind:

- Frischluftseitig (bei der Zufuhr von Frischluft in den Zylindern) kann ein schneller bzw. hoher Ladedruckaufbau realisiert werden. Damit kann zu einem früheren Zeitpunkt eine erhöhte Einspritzmenge an Kraftstoff freigeben werden. Diese führt zu einem schnelleren bzw. höheren Aufbau des inneren Moments (Drehmoment aufgrund der Verbrennung im Zylinder).
- Abgasseitig sind die Ladungswechselverluste zu reduzieren bzw. zu beeinflussen, indem der Verlauf der VTG-Position den Verlauf des Abgasgegendrucks mitbestimmt (z.B. durch einen geringeren Aufbau des Abgasgegendrucks).

Überraschenderweise hat sich gezeigt, dass ein langes und stärkeres Schließen der VTG (Reduktion der minimalen Querschnittsfläche, d.h. verringerter sog. Minflow) zwar einen stärkeren bzw. schnelleren Aufbau des Abgasgegendrucks bewirkt. Dabei ist jedoch der Einfluss auf den Ladedruckverlauf (frischluftseitig) und die Fahrzeugbeschleunigung relativ gering. Dies deutet darauf hin, dass die Energie des Abgasgegendruckaufbaus nur sehr begrenzt in eine erhöhte Laderdrehzahl und damit einen erhöhten Ladedruckaufbau umgesetzt werden kann. Dies ist durch die Wirkungsgradcharakteristik des Turboladers bedingt. Der in dieser Erfindung verfolgte Ansatz liegt in der Begrenzung des Verlustmoments, und zwar durch eine Begrenzung des Abgasgegendrucks. Damit wird der Aufbau des Ladedrucks optimiert und damit das Effektivmoment schneller erhöht.

Die erfindungsgemäße Einstellung der Abgasturboladergeometrie (VTG) zur Begrenzung des Abgasgegendrucks verringert die nicht nutzbare Enthalpie vor der Turbine teilweise. Besonders deutlich ist dieser Effekt bei der Verwendung eines Abgasturboladers mit reduziertem minimalen Massenstrom (Minflow). Durch die Verringerung der Enthalpie wird gleichzeitig der Ladedruckaufbau schneller realisiert. Die Begrenzung des Abgasgegendrucks begünstigt zwei erwünschte Effekte:

- schneller Ladedruckaufbau und damit einen schnelleren Aufbau des inneren Motormoments (durch eine höhere Einspritzmenge) und
- geringere Ladungswechselverluste durch die Begrenzung des Abgasgegendrucks.

Damit steigt das Effektivmoment und das für die Beschleunigung wesentliche Radbeschleunigungsmoment des Fahrzeugs im Vergleich zu herkömmlichen Ansteuerfunktionalitäten.

Erfindungsgemäß wird dies dadurch gelöst, dass zunächst eine Betriebszustandsollgröße erfasst wird, dabei kann es sich z.B. um ein Solldrehmoment handeln oder auch einen sog. Fahrerwunsch (Volllastanforderung), der durch Betätigung des Gaspedals an eine Fahrzeugsteuerung abgegeben wird. Durch Einstellen eines Stellkriteriums der verstellbaren Turbinengeometrie (VTG-Stellkriterium) wird eine Erhöhung des Ladedrucks zur Umsetzung einer gewünschten Drehmomenterhöhung realisiert.

Die Begriffe Kontrolle, Einstellen, Ansteuerung, Steuerung, Regelung umfassen im Zusammenhang mit dieser Erfindung sowohl Steuerungen im eigentlichen Sinne (ohne Rückkopplung) als auch Regelungen (mit einem oder mehreren Regelkreisen).

Die Schritte zum Einstellen oder Einregeln des Abgasgegendrucks mittels dieses maximalen VTG-Stellkriteriums umfassen insbesondere folgendes:
Zunächst wird ein Sollladedruck ermittelt (beispielsweise aus einem Kennfeld), der für die angestrebte Beschleunigung, den gewünschten (Voll)-Lastzustand oder den angestrebten Drehmomentenzuwachs geeignet bzw. optimiert ist. In Abhängigkeit davon kann eine VTG-Sollstellung ermittelt werden, bei deren Einstellung es jedoch durch einen zu hohen Abgasgegendruck zu dem unerwünschten Enthalpiestau vor der Turbine kommen kann. Zur Limitierung dieser Sollstellung ist daher vorgesehen:

Die Ermittlung (durch Messung, Modellierung, Berechnung etc.) eines Ist-Abgasgegendrucks und die Ermittlung eines maximalen Abgasgegendrucks. Zur Bestimmung des VTG-Stellkriteriums wird die Differenz zwischen dem Ist-Abgasgegendruck und dem maximalen Abgasgegendruck berücksichtigt. Auf dieser Grundlage wird ein maximales VTG-Stellkriterium ermittelt, welches die bereits vorliegende VTG-Sollstellung derart limitiert, dass eine beschleunigte Anpassung des Ladedrucks an den Sollladedruck erfolgt gegenüber einer Anpassung des Istladedrucks an den Sollladedruck ohne Berücksichtigung des maximalen VTG-Stellkriteriums. Damit kann der unerwünschte oben beschriebene Enthalpiestau vor der Turbine durch eine geeignete Einstellung des Abgasgendrucks verhindert werden. Durch die Begrenzung des Abgasgegendrucks über die Bestimmung eines geeigneten maximalen VTG-Stellkriteriums ist neben einer Effektivmomentoptimierung auch eine einheitliche Begrenzung des Abgasgegendrucks möglich, die dazu dient, Bauteilstreuungen von Abgasturboladern bzgl. ihrer Minflow-Werte zu reduzieren. Die Limitierung des Abgasgegendrucks dient auch dem Bauteilschutz für Bauteile hinter bzw. im Abgaskrümmer.

Da über den Abgasgegendruck auch das Spülgefälle im Zylinder beeinflusst wird, kann so auch der Restgasanteil im Zylinder eingestellt werden. Damit können die Emissionen bei Dieselmotoren günstig beeinflusst werden. Bei Ottomotoren können die Brennbedingungen durch die Limitierung des Restgasanteils im Zylinder sichergestellt werden. Insbesondere lässt sich jedoch so ein kultivierter, ruckfreier, aber trotzdem zügiger Momentenaufbau realisieren. Ein Momentrucken bzw. Momentensprünge, die durch eine plötzliche Übertragung von angestauter Abgasenthalpie auf das Turbinenrad auftreten können, werden vermieden.

Es gibt Ausführungen, bei denen die Ermittlung des maximalen Abgasgegendrucks weiter folgendes umfasst: Eine Parametrierung eines ersten maximalen Abgasgegendrucks unter Berücksichtigung einer Betriebszustandsgröße (z.B. einer Motordrehzahl) und einer Betriebszustandssollgröße (z.B. Motorsolldrehmoment) sowie eines Umgebungsdrucks, Parametrierung eines zweiten maximalen Abgasgegendrucks unter Berücksichtigung der Betriebszustandsgröße und der Differenz zwischen dem Sollladedruck und dem Istladedruck. Der maximale Abgasgegendruck wird dann als Minimum des ersten maximalen Abgasgegendrucks und des zweiten maximalen Abgasgegendrucks festgelegt. Die Besonderheit bei der Parametrierung des zweiten maximalen Abgasgegendrucks besteht darin, dass ein Ladedruck-Istwert zu dem jeweiligen parametrierten Wert addiert wird, der in Abhängigkeit von der Differenz zwischen dem Sollladedruck und dem Istladedruck sowie der Betriebszustandsgröße ermittelt wurde.

Dabei gibt es Verfahren, bei denen der Ist-Ladedruck und/oder der Ist-Abgasgegendruck mittels eines Sensors bestimmt wird oder alternativ ein modellierter Wert ist, der aus den jeweiligen Betriebszustandsgrößen modellierbar, berechenbar bzw. in geeigneten Kennfeldern hinterlegt ist.

Bei einem Verfahren, bei dem die Parametrierung des zweiten maximalen Abgasgegendrucks unter Berücksichtigung eines Spülgefälles erfolgt, kann beim Einstellen des maximalen Abgasgegendrucks ebenfalls ein zulässiges Spülgefälle eingehalten werden.

Dabei gibt es Verfahren, bei denen das Spülgefälle mittels eines Kennfeldes bestimmt wird. Dies erlaubt eine besonders einfache Betriebszustand abhängige Bestimmung des Spülgefälles.

Durch ein Verfahren, bei dem die Bestimmung des VTG-Stellkriteriums unter Berücksichtigung einer maximalen Abgasgegendruckänderung erfolgt, kann die Einstellungsqualität insbesondere die Regelqualität weiter verbessert werden. Damit wird die Einstellungsgeschwindigkeit des einzustellenden Abgasgegendrucks mitberücksichtigt, sodass dessen Anpassung optimiert werden kann.

Bei einem Verfahren, bei dem die maximale Abgasgegendruckänderung aus einer Parametrierung der Betriebszustandsgröße, insbesondere einer Drehzahl und der Betriebszustandssollgröße, insbesondere eines Solldrehmoments oder Lastzustands, bestimmt wird, und diese dann entsprechend der Differenz zwischen dem Ist-Abgasgegendruck und dem maximalen Abgasgegendruck gewichtet wird, lässt sich das Verfahren weiter verfeinern.

Eine weitere Verfeinerung wird dadurch realisiert, dass zur Bestimmung der maximalen Abgasgegendruckänderung ein Korrekturfaktor berücksichtigt wird, der aus der Differenz zwischen dem Ist-Abgasgegendruck und dem maximalen Abgasgegendruck parametriert wird (z.B. über ein Kennfeld, eine Modellierung oder eine Rechenvorschrift).

Damit kann die Einstellung, die insbesondere über einen Proportionalregler (P-Regler) erfolgen kann, mit einem sog. Gain-Scheduling ausgestattet werden. Damit wird eine Parametrierung ermöglicht, bei der die Verstärkung und die damit zusammenhängende Einregelgeschwindigkeit des geschlossenen Regelkreises in Abhängigkeit vom Motorsolldrehmoment (Betriebszustandssollgröße) und der Drehzahl (Betriebszustandsgröße) eingestellt wird. Mit der entsprechenden Regelabweichung (der Differenz zwischen dem maximal zulässigen Abgasgegendruck und dem Ist-Abgasgegendruck) erfolgt eine Gewichtung. Dieses Verfahren wird auch "Gain-Scheduling" genannt.

Eine zuverlässige Ermittlung des VTG-Stellkriteriums erfolgt unter Berücksichtigung der Beziehung

$$u_{max} = \Delta u_{p3_{Ctl\,max}} + \Delta u_{p4} + \Delta u_T + \Delta u_{\dot{m}} + r_{Vtg}$$

für die gilt

$$\Delta u_{p3_{Ctl\,max}} = \alpha \cdot \dot{p}3_{max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \, \ddot{m}$$

mit

$$\alpha = \frac{\tau}{\left(\dfrac{\partial p_3}{\partial c_d} \cdot \dfrac{\partial c_d}{\partial r} + \dfrac{\partial p_3}{\partial A_{eff}} \cdot \dfrac{\partial A_{eff}}{\partial r}\right)}$$

Damit lässt sich eine Eingangs-Ausgangslinearisierung realisieren, die es erlaubt, aus der maximal zulässigen zeitlichen Änderung des Abgasgegendrucks mit Hilfe von zurückgeführten Zustandsgrößen (wie z.B. der Temperaturen $T_1$, $T_2$, vor und nach dem Lader; die Temperaturen $T_3$, $T_4$ vor und nach der Turbine, die Ist-Drücke $p_3$, $p_4$ vor und nach der Turbine; die Ist-VTG-Position) der Regelstrecke das VTG-Stellkriterium zu bestimmen.

Die Herleitung der oben angegebenen Berechnungszusammenhänge ergibt sich wie folgt:
Zur Herleitung des Stellgesetzes wird auf die Drosselgleichung (Gleichung 1) zur Beschreibung des Abgasgegendrucks $p_3$ nach [1] Schollmeyer, Beitrag zur modellbasierten Ladedruckregelung für Pkw-Dieselmotoren zurückgegriffen und das Verfahren der Ein-/ Ausgangslinearisierung (E/A-Linearisierun) gemäß [2] Isidori, Nonlinear Control Systems, 1995 angewendet.

$$p_3 = -\frac{(6c_d^2 - 2c_{dK})p_4}{2(2c_{dK} - 3c_d^2)} \pm \sqrt{\left(\frac{(6c_d^2 - 2c_{dK})p_4}{2(2c_{dK} - 3c_d^2)}\right)^2 + \frac{3c_d^2 p_4^2 A_{eff}^2 + \dot{m}^2 R_s \cdot T_{3K}}{A_{eff}^2 (2c_{dK} - 3c_d^2)}} \qquad (1)$$

Der Abgasgegendruck $p_3$ ist abhängig von den Größen Durchflussfaktor $c_d$, effektiver Fläche $A_{eff}$, Temperatur vor der Turbine $T_3$, Turbinenmassenstrom $\dot{m}$ sowie dem Druck nach der Turbine $p_4$, welche wiederum von der Zeit abhängen und im Steuergerät als Modell- oder Sensorgrößen vorliegen. Die Fallunterscheidung des Wurzelterms erfolgt gem. [1] anhand des Kriteriums $\xi = 2c_{dK} - 3c_d^2$. Nimmt $\xi$ positive Werte an, wird der Wurzelterm addiert, nimmt er er negative an, wird er subtrahiert.

Die Größen $A_{eff}$ und $c_d$ hängen jeweils nichtlinear von der Stellerposition $r_{Vtg}$ ab, sodass es formal ohne Anwendung eines Such- bzw. Optimierungsverfahrens nicht möglich ist, zu einem Abgasgegendruck eine Stellerposition zu erreichen. Durch Anwendung der E/A-Linearisierung ist dieses Problem lösbar.

Wie das Schema der E/A-Linearisierung vorschreibt, wird diese Gleichung für $\rho_3$ nun solange nach der Zeit abgeleitet, bis die Stellgröße $r_{Vtg}$ (VTG-Position) eingangsaffin auftritt.

Hierzu wird zusätzlich das (positionsgeregelte) Stellerverhalten der variablen Turbinengeometrie (VTG) als PT1-Verhalten gem. Gleichung 2 modelliert.

$$\tau \cdot \dot{r} = u - r_{Vtg} \qquad (2)$$

Die Größe u ist hierbei die gesuchte Stellerposition der Vtg.

Für die erste zeitliche Ableitung des Abgasgegendrucks $\dot{p}_3$ ergibt sich die Gleichung 3, welche die zeitliche Stellgrößenänderung r beinhaltet.

$$\dot{p}_3 = \left( \frac{\partial p_3}{\partial c_d} \cdot \frac{\partial c_d}{\partial r} + \frac{\partial p_3}{\partial A_{eff}} \cdot \frac{\partial A_{eff}}{\partial r} \right) \cdot \dot{r} + \frac{\partial p_3}{\partial p_4} \cdot \dot{p}_4 + \frac{\partial p_3}{\partial T_3} \cdot \dot{T}_3 + \frac{\partial p_3}{\partial \dot{m}} \ddot{m} \qquad (3)$$

Nun kann r aus Gleichung 2 in Gleichung 3 eingesetzt werden, sodass sich Gleichung 4 ergibt. Man erkennt, dass einer zeitlichen Änderung des Abgasgegendrucks eine notwendige Stellerposition zugeordnet werden kann. Im Rahmen der Begrenzungsregelung sind diese Größen als zulässige maximale Änderung des Abgasgegendrucks, dem eine zulässige maximale Soll-VTG-Position entspricht, zu interpretieren.

$$\dot{p}_3 = \left( \frac{\partial p_3}{\partial c_d} \cdot \frac{\partial c_d}{\partial r} + \frac{\partial p_3}{\partial A_{eff}} \cdot \frac{\partial A_{eff}}{\partial r} \right) \cdot \frac{1}{\tau} \left( u - r_{Vtg} + \frac{\partial p_3}{\partial p_4} \right) \cdot \dot{p}_4 + \frac{\partial p_3}{\partial T_3} \cdot \dot{T}_3 + \frac{\partial p_3}{\partial \dot{m}} \ddot{m} \qquad (4)$$

Dabei wird deutlich, dass die gesuchte Stellgröße u in der ersten Ableitung von $p_3$ linear auftritt; die differenzielle Ordnung ist $\delta = 1$ und es ist nicht erforderlich, weitere zeitliche Ableitungen der $p_3$-Zustandsgleichung zu bilden. Durch die Differenzierungen können die Stellanteile von in $c_d$ und $A_{eff}$ summiert werden zu einem gemeinsam wirksamen Stellanteil.

Aus Gleichung 4 kann bei Vorliegen der partiellen Ableitungen nun die erforderliche (im hiesigen Fall maximale Stellgröße u für eine (hier maximal zulässige) Abgasgegendruckänderung $\dot{p}_3$ mittels einfache Termumformung ermittelt werden, was auf Gleichung 5 führt. Wie zuvor beschrieben, entspricht $\dot{p}_3$ Ausgangsgröße des übergeordneten P-Reglers, sodass sich als Stellgesetz wie folgt ergibt:

$$u = \frac{\tau}{\left( \frac{\partial p_3}{\partial c_d} \cdot \frac{\partial c_d}{\partial r} + \frac{\partial p_3}{\partial A_{eff}} \cdot \frac{\partial A_{eff}}{\partial r} \right)} \left( \dot{p}_3 - \frac{\partial p_3}{\partial p_4} \cdot \dot{p}_4 - \frac{\partial p_3}{\partial T_3} \cdot \dot{T}_3 - \frac{\partial p_3}{\partial \dot{m}} \ddot{m} \right) + r_{Vtg} \qquad (5)$$

Interpretiert man diese Gleichung unter der vorliegenden Aufgabe der Begrenzungsregelung, so werden die betreffenden Größen $\dot{p}_3$ und u mit max-Indizes versehen. Zudem kann durch Ausmultiplizieren jeder Zustandsableitung ein Positionsänderungsanteil $\Delta u$ als Abweichung zur Ist-Position $r_{Vtg}$ definiert werden, wodurch Störanteile und deren Einfluss auf Positionsänderungen transparenter als in klassischen Regelungsansätzen identifizierbar sind. Somit ergibt sich die kompakte Darstellung aus Gleichung 6.

$$u_{max} = \Delta u_{p3_{Ctl\,max}} + \Delta u_{p4} + \Delta u_T + \Delta u_{\dot{m}} + r_{Vtg} \qquad (6)$$

Hierbei folgt die Zuordnung der $\Delta u$-Größen gem. Gleichungssatz 7, bei gleichzeitiger Verwendung eines Proportionalreglers (mit seiner Verstärkung $K_p$) bei der Rückführung des Ist-Abgasgegendrucks $p_3$.

$$\Delta u_{p3_{Ctl\,max}} = \alpha \cdot \dot{p}3_{max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3 \qquad (7)$$

$$\Delta u_{\dot{m}} = -\alpha \cdot \frac{\partial p_3}{\partial \dot{m}} \ddot{m}$$

mit

$$\alpha = \frac{\tau}{\left( \frac{\partial p_3}{\partial c_d} \cdot \frac{\partial c_d}{\partial r} + \frac{\partial p_3}{\partial A_{eff}} \cdot \frac{\partial A_{eff}}{\partial r} \right)}$$

Letztlich wird durch das Einsetzen des P-Reglers zur Bildung der maximal zulässigen Abgasgegendruckänderung der Regelkreis geschlossen. Die zeitlichen Ableitungen der anderen Zustandsgrößen können entweder über eine näherungsweise Berechnung mittels Differenzenquotienten und deren Filterung bzw. Einsatz von DT1-Gliedern erfolgen, oder mittels der Berechnung von Zustandsdifferentialgleichungen erster Ordnung in jedem Zeitschritt im Rahmen eines Zustandsbeobachters. Die Nutzung von DT1-Gliedern, die von den im Steuergerät vorhandenen Zustandsgrößen gespeist werden, hat sich im hiesigen Anwendungsfall als praktikabel und hinreichend zur Näherung der zeitlichen Ableitungen der Zustandsgrößen erwiesen.

Nachfolgend werden zwecks Vollständigkeit die partiellen Ableitungen dargestellt, die in jedem Zeitschritt aus den im Steuergerät vorhandenen zeitvarianten Zustandsgrößen berechnet werden.

Partielle Ableitungen der stationären $p_3$-Gleichung

Stationäre Zustandsgleichung des Abgasgegendrucks

$$p_3 = -\frac{(6c_d^2 - 2c_{dK})p_4}{2(2c_{dK} - 3c_d^2)} \pm \sqrt{\left(\frac{(6c_d^2 - 2c_{dK})p_4}{2(2c_{dK} - 3c_d^2)}\right)^2 + \frac{3c_d^2 p_4^2 A_{eff}^2 + \dot{m}^2 R_s \cdot T_{3K}}{A_{eff}^2(2c_{dK} - 3c_d^2)}}$$

Partielle Ableitungen

Ob der positive oder der negative Wurzelterm zu wählen ist, hängt von dem Term $\xi := 2c_{dK} - 3c_d^2$ ab. Ist $\xi$ positiv wird der Wurzelterm addiert, ist $\xi$ negativ wird der Wurzelterm subtrahiert. Dementsprechend wird im Folgenden jeweils eine Fallunterscheidung vorgenommen.

Parteielle Ableitung nach $r_{Vtg}$

$$\frac{\partial p_3}{\partial r_{Vtg}} = \frac{\partial p_3}{\partial A_{eff}} \cdot \frac{\partial A_{eff}}{\partial r_{Vtg}} + \frac{\partial p_3}{\partial c_d} \cdot \frac{\partial c_d}{\partial r_{Vtg}} \frac{[hPa]}{[\%]}$$

$$\frac{\partial p_3}{\partial A_{eff}} = \pm \frac{3\frac{c_d^2 p_4^2}{A_{eff}(2c_{dK} - 3c_d^2)} - \frac{3c_d^2 p_4^2 A_{eff}^2 + \dot{m}^2 R_s \cdot T_{3K}}{A_{eff}^3(2c_{dK} - 3c_d^2)}}{\sqrt{\frac{(6c_d^2 - 2c_{dK})^2 p_4^2}{(4c_{dK} - 6c_d^2)^2} + \frac{3c_d^2 p_4^2 A_{eff}^2 + \dot{m}^2 R_s T_{3K}}{A_{eff}^2(2c_{dK} - 3c_d^2)}}}$$

$$\frac{\partial p_3}{\partial c_d} = \frac{(-12c_d + 2_K)p_4}{(4c_{dK} - 6c_d^2)} - \frac{(-6c_d^2 + 2c_{dK})p_4(4K - 12c_d)}{(4c_{dK} - 6c_d^2)^2} \pm \dots$$

$$\dots \pm \frac{\left(2\frac{(6c_d^2 - 2c_{dK})p_4^2(12c_d - 2_K)}{(4c_{dK} - 6c_d^2)^2} - 2\frac{(6c_d^2 - 2c_{dK})^2 p_4^2(4K - 12c_d)}{(4c_{dK} - 6c_d^2)^3} + \frac{6c_d p_4^2}{2c_{dK} - 3c_d^2} - \frac{(3c_d^2 p_4^2 A_{eff}^2 + \dot{m} R_S T_{3K})(2K - 6c_d)}{A_{eff}^2(2c_{dK} - 3c_d^2)^2}\right)}{2 \cdot \sqrt{\frac{(6c_d^2 - 2c_{dK})^2 p_4^2}{(4c_{dK} - 6c_d^2)^2} + \frac{3c_d^2 p_4^2 A_{eff}^2 + \dot{m}^2 R_S T_{3K}}{A_{eff}^2(2c_{dK} - 3c_d^2)}}}$$

Partielle Ableitung nach $p_4$

$$\frac{\partial p_3}{\partial p_4} = \frac{-6c_d^2 + 2c_{dK}}{4c_{dK} - 6c_d^2} \pm \frac{\left(\frac{(6c_d^2 - 2c_{dK})^2 p_4}{(4c_{dK} - 6c_d^2)^2} + 3\frac{c_d^2 p_4}{2c_{dK} - 3c_d^2}\right)}{\sqrt{\frac{(6c_d^2 - 2c_{dK})^2 p_4^2}{(4c_{dK} - 6c_d^2)^2} + \frac{3c_d^2 p_4^2 A_{eff}^2 + \dot{m} R_S T_{3K}}{A_{eff}^2(2c_{dK} - 3c_d^2)}}}$$

Partielle Ableitung nach $T_3$

$$\frac{\partial p_3}{\partial T_3} = \pm \frac{\dot{m}^2 R_{sK}}{2 \cdot \sqrt{\frac{(6c_d^2 - 2c_{dK})^2 p_4^2}{(4c_{dK} - 6c_d^2)^2} + \frac{3c_d^2 p_4^2 A_{eff}^2 + \dot{m} R_S T_{3K}}{A_{eff}^2(2c_{dK} - 3c_d^2)}} A_{eff}^2 (2c_{dK} - 3c_d^2)}$$

Partielle Ableitung nach $\dot{m}$

$$\frac{\partial p_3}{\partial \dot{m}} = \pm \frac{\dot{m} R_S T_{3K}}{\sqrt{\frac{(6c_d^2 - 2c_{dK})^2 p_4^2}{(4c_{dK} - 6c_d^2)^2} + \frac{3c_d^2 p_4^2 A_{eff}^2 + \dot{m} R_S T_{3K}}{A_{eff}^2(2c_{dK} - 3c_d^2)}} A_{eff}^2 (2c_{dk} - 3c_d^2)}$$

Bei einem Verfahren, bei dem die Betriebszustandsgröße eine Motordrehzahl und die Betriebszustandsgröße ein Motorsollmoment ist, lassen sich die gewünschten Einstellung / Regelungen mit besonders leicht ermittelbaren bzw. ableitbaren Zustandsgrößen durchführen.

Bei einem Verfahren, bei dem die Bestimmung des Abgasgegendrucks über eine regelungstechnisch realisierte Ein-/Ausgangslinearisierung erfolgt, die insbesondere die folgenden Größen (wie z.B. die Temperaturen $T_4$ nach der Turbine, der Ist-Druck $p_3$, vor der Turbine; der Abgasmassenstrom $\dot{m}$) berücksichtigt (bei der diese Größen zurückgeführt werden) können exogene Einflussgrößen in Modellanteilen der Regelungen berücksichtigt werden und Störungen durch sich ändernde Umweltbedingungen wie Umgebungstemperatur und Umgebungsdruck können einfach kompensiert werden.

Dadurch ist der Applikationsaufwand im Vergleich zu anderen Lösungen reduzierbar. Weiterhin wird die Nichtlinearität der turbinenseitigen Drosselstelle nominell kompensiert, sodass sich die Parametrisierung mittels eines einfachen P-Reglers realisieren lässt. Mit diesem Linearisierungsteil bzw. Linearisierungsverfahren wird die Nichtlinearität der Regelstrecke kompensiert.

Für die Linearisierung wird wie oben dargestellt die Zustandsgleichung der zeitlichen Abgasgegendruckänderung bis zum Erreichen des relativen Grades bzw. der Stellgröße abgeleitet, sodass eine Modellinverse gebildet werden kann, bei der das VTG-Stellkriterium (die maximal zulässige VTG-Position) in Abhängigkeit von einer maximal zulässigen Änderung des Abgasgegendrucks ermittelt wird. In Verbindung mit einem linearen P-Regler, der die Regelabweichung zwischen dem parametrierbaren maximalen Abgasgegendruck und einem Ist-Modell oder Messwert des Abgasgegendrucks berechnet bzw. bewertet und so die pro Zeitschritt maximal zulässige zeitliche Änderung des Abgasgegendrucks ausgibt, ergibt sich für den begrenzten Fall bei konstanter Parametrierung des P-Reglers ein lineares Verzögerungsverhalten erster Ordnung.

Manche Ausführungsbeispiele betreffen eine Steuerung für ein Aufladungssystem für eine Verbrennungskraftmaschine, wobei die Steuerung dazu eingerichtet, das oben beschriebene Verfahren auszuführen. Die Steuerung kann einen Prozessor und einen Speicher aufweisen, in dem das Verfahren und entsprechende Kennlinien, Kennfelder, Modelle, Rechenprogramme oder dergleichen abgespeichert sind. Die Steuerung kann beispielsweise als Motorsteuergerät ausgebildet sein.

Manche Ausführungsbeispiele betreffen eine Verbrennungskraftmaschine mit einem Aufladungssystem und einer Steuerung wie oben beschrieben.

Manche Ausführungsbeispiele betreffen auch ein Kraftfahrzeug mit einer solchen Verbrennungskraftmaschine.

Ausführungsbeispiele der Erfindung werden nun beispielhaft und unter Bezugnahme auf die beigefügte Zeichnung beschrieben. Darin zeigt:

Fig. 1  schematisch ein Ausführungsbeispiel eines Kraftfahrzeugs mit einem Ladungssystem und einer Steuerung;

Fig. 2  Verlaufsdiagramme, welche Geschwindigkeitsverläufe, Ladedruckverläufe, Gegendruckverläufe und Stellungsverläufe der Abgasturbinengeometrie über die Zeit zeigen und den Unterschied des erfindungsgemäßen Verfahrens zu herkömmlichen Verfahren aufzeigen;

Fig. 3  eine schematische Darstellung einer erfindungsgemäßen Abgasgegendruckbegrenzungsregelung;

Fig. 4  eine schematische Darstellung zur Ermittlung eines maximal zulässigen Abgasgegendrucks entsprechend dem erfindungsgemäßen Verfahren und

Fig. 5  eine schematische Darstellung zur Regelung unter Berücksichtigung eines Gain-Scheduling Ansatzes.

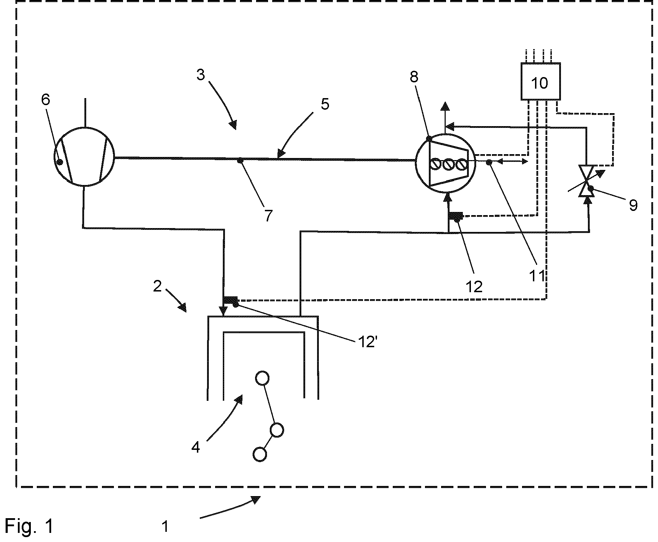

Ein Ausführungsbeispiel eines Kraftfahrzeugs 1 mit einem Motor 2 und einem Aufladungssystem 3, das von einer Steuerung 10 gesteuert wird, die als Motorsteuergerät ausgestaltet ist, ist in Figur 1 veranschaulicht.

Die vorliegende Erfindung ist nicht auf einen bestimmten Motortyp beschränkt. Es kann sich um eine Verbrennungskraftmaschine handeln, die als Ottomotor oder als Dieselmotor ausgelegt ist.

Der Motor 2 umfasst einen oder mehrere Zylinder 4, von denen hier einer dargestellt ist. Die Zylinder 4 werden vom Aufladungssystem 3 mit aufgeladener (Verbrennungs-) Luft versorgt.

Das Aufladungssystem 3 hat eine Aufladungsstufe mit variabler Turbinengeometrie. Die Aufladungsstufe 5 ist mit der Steuerung 10 gekoppelt.

Die Aufladungsstufe 5 hat einen Verdichter 6, der über eine Welle 7 mit einer Turbine (Abgasturbine) 8 mit variabler Turbinengeometrie (VTG) betrieben wird, wobei die Turbine 8 mit Abgas aus dem Motor 2 versorgt und damit angetrieben wird. Zusätzlich ist optional ein Waste-Gate 9 vorgesehen.Optional kann auch ein mehrstufig aufgeladenes Aggregat vorgesehen werden.

Im Betrieb wird Umgebungsluft mit dem Umgebungsdruck $p_1$ und der Umgebungstemperatur $T_1$ durch den Verdichter 6 geführt, verdichtet und mit dem Ladedruck $p_2$ und der Ladetemperatur $T_2$ in den Zylinder 4 geführt. Die Abgase werden mit dem Abgasgegendruck $p_3$ und der Abgastemperatur $T_3$ in die Turbine geführt und treten dort mit der Nachturbinentemperatur $T_4$ und dem Nachturbinendruck $p_4$ aus. Die Steuerung ist mit dem Waste-Gate 9 und einem Mechanismus 11 für die Einstellung der variablen Turbinengeometrie verbunden sowie optional mit einem Sensor 12, mit dem die Abgastemperatur $T_3$ bzw. der Abgasgegendruck $p_3$ gemessen werden kann. Optional ist ein weiterer Sensor 12' vorgesehen, mit dem der Ladedruck $p_2$ und die Lufttemperatur $T_2$ nach dem Verdichter 6 gemessen werden kann. Die Steuerung ist mit weiteren Sensoreingängen und Signalausgängen ausgestattet, um Betriebszustandsgrößen zu empfangen, zu verarbeiten und Stell- und Steuersignale abzugeben. Dazu gehören z.B. die oben angegebenen Temperatur- und Druckwerte, die entweder über Sensoren oder über Betriebszustandsgrößen ermittelt bzw. modelliert oder auch über Kennfelder bestimmbar sind.

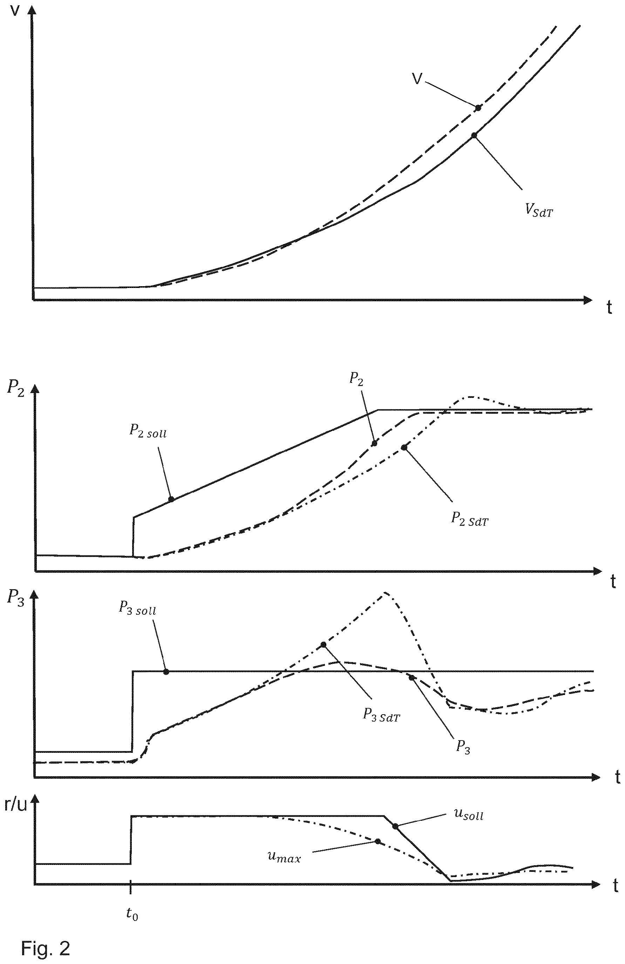

Figur 2 zeigt mehrere Diagramme übereinander, bei denen bestimmte Steuer- und Zustandsgrößen über der Zeit aufgetragen sind.

Im oberen Diagramm ist die Fahrzeuggeschwindigkeit $v$ über die Zeit aufgetragen. Die durchgezogene Linie kennzeichnet einen Geschwindigkeitsverlauf $v_{SdT}$ ohne Anwendung des erfindungsgemäßen Verfahrens und die gestrichelte Linie zeigt den Geschwindigkeitsverlauf $v$ für ein Fahrzeug, bei dem das erfindungsgemäße Verfahren angewendet wurde.

Die Fahrzeuggeschwindigkeit und die Beschleunigung ist abhängig vom darunter angeordneten Ladedruckverlauf $p_2$. Zu einem Zeitpunkt $t_0$ wird beispielsweise durch Betätigen des Gaspedals ein Beschleunigungswunsch (z.B. Volllastanforderung) an die Steuerung 10 übermittelt, die daraufhin einen Sollladedruck (durchgezogene Linie) bzw. einen Sollladedruckverlauf $p_{2soll}$ bestimmt, der zu der gewünschten Ladedruckerhöhung und damit zu der gewünschten Beschleunigung führt. Die strichpunktierte Linie zeigt einen Ladedruckverlauf, der sich bei einer herkömmlichen Ladedruckregelung ergibt. ($p_{2SdT}$). Die gestrichelte Linie zeigt einen Ladedruckverlauf $p_2$, der sich bei Anwendung des erfindungsgemäßen Verfahrens ergibt. Dieser Verlauf ist näher am Verlauf des Sollladedrucks und führt daher auch zu der verbesserten Beschleunigung bzw. der erhöhten Geschwindigkeit im Diagramm darüber.

Im Diagramm darunter ist der Verlauf des Abgasgegendrucks $p_3$ über die Zeit aufgetragen. Die durchgezogene Rampenkurve zeigt den Verlauf des theoretischen, maximalen Abgasgegendrucks $p_{soll}$, der eingestellt werden soll, um eine optimale Einstellung des Ladedrucks und damit der Beschleunigung einzustellen. Die strichpunktierte Linie zeigt den tatsächlichen Verlauf des Abgasgegendrucks $p_{3SdT}$ ohne Anwendung des erfindungsgemäßen Verfahrens. Die gestrichelte Linie zeigt den Verlauf des Ist-Abgasgegendrucks $p_3$ bei Anwendung des erfindungsgemäßen Verfahrens, das eine Abgasgegendruckbegrenzung einstellt, die den tatsächlichen Abgasgegendruck nahe an den Sollabgasge-

gendruck $p_{soll}$ einregelt. In diesem Diagramm ist in der Fläche des herkömmlichen Abgasgegendruckverlaufs und dem erfindungsgemäßen Abgasgegendruckverlauf ein "Enthalpiestau" erkennbar, der dazu führt, dass der gewünschte Ladedruck durch die ungenutzte Enthalpie verzögert aufgebaut wird und über den Sollladedruck hinausschießt.

Im unteren Diagramm ist die Stellung r der Turboladergeometrie eingestellt. Die durchgezogene Linie kennzeichnet den Verlauf $u_{soll}$ der verstellbaren Turbinengeometrie ohne Berücksichtigung einer Abgasgegendruckbegrenzung. Während der gestrichelte Verlauf unter Berücksichtigung einer Abgasgegendruckbegrenzung ermittelt wird und den erfindungsgemäßen Verlauf des Stellkriteriums $u_{max}$ der verstellbaren Turboladergeometrie darstellt. Dieser verläuft unterhalb des Verlaufes der Sollstellung $u_{soll}$ und verhindert so den überschießenden Abgasgegendruckverlauf im Diagramm darüber.

Das erfindungsgemäße Verfahren ist weiter anhand der Figuren 2, 3 bis 5 zu erklären.

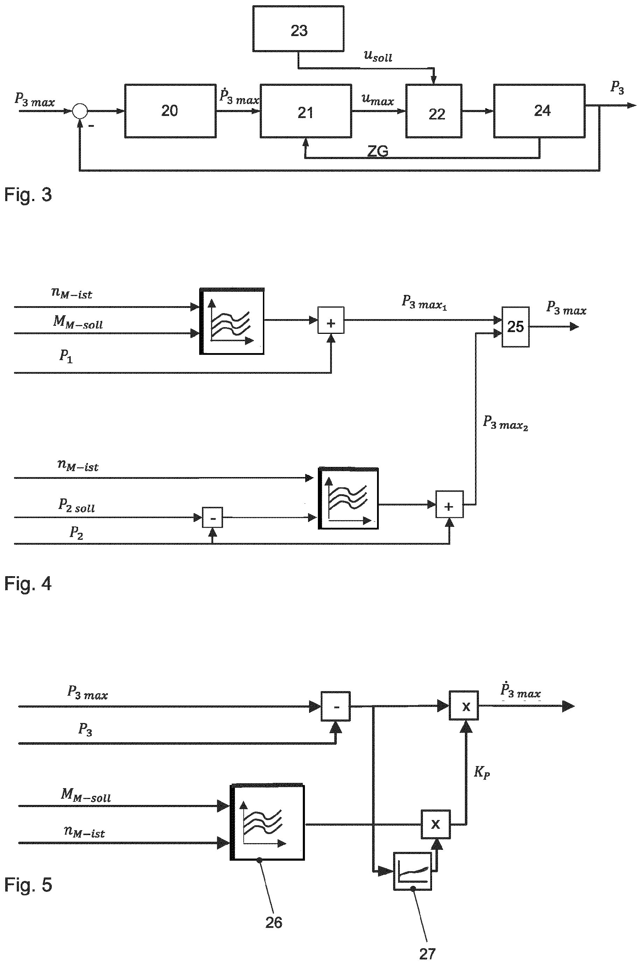

In Figur 3 ist ein Regelkreis dargestellt, der unter Berücksichtigung eines maximalen Abgasgegendrucks $p_{3max}$ (s. u.), einen Istabgasgegendruck $p_3$ einregelt, welcher einen optimierten Ladedruck $p_2$ Verlauf realisiert. Die Differenz aus dem maximalen Abgasgegendruck $p_{3max}$ und dem Abgasgegendruck $p_3$ wird einem Regler 20 (P-Regler) zugeführt, der eine maximale Abgasgegendruckänderung $\dot{p}_{3max}$ an einen Linearisierungsblock 21 weiterleitet. Der Linearisierungsteil bestimmt unter Berücksichtigung weiterer Zustandsgrößen ZG (wie z.B. die Temperatur $T_3$ vor der Turbine, die Ist-Drücke $p_3$, $p_4$, vor und nach der Turbine sowie der Abgas-(Turbinen-)massenstrom $\dot{m}$) ein maximales VTG-Stellkriterium $u_{max}$, welches in einen Limitierungsteil 22 geführt wird. Im Limitierungsteil 22 wird das VTG-Stellkriterium $u_{max}$ mit einer regulären VTG-Stellung $u_{soll}$ verglichen, welches aus einem konventionellen Ladedruckregelungsteil 23 zugeführt wird. Das VTG-Stellkriterium $u_{max}$ limitiert die VTG-Sollstellung $u_{soll}$ derart, dass über die verstellbare Turbinengeometrie bzw. den Verstellmechanismus 11 (VTG) und/oder gegebenenfalls auch über den Waste-Gate 9 der Abgasgegendruck $p_3$ nahe dem gewünschten Sollabgasgegendruck $p_{3soll}$ eingeregelt wird. Der über die Steuerung 10 ansprechbare Mechanismus 11 der verstellbaren Turbinengeometrie entspricht dabei der Regelstrecke 24 in der Fig. 3.

Fig. 4 zeigt schematisch die Bestimmung des maximal zulässigen Abgasgegendrucks $p_{3max}$. Im oberen Zweig wird dabei aus der Motordrehzahl n und einem Sollmotordrehmoment $M_{m\text{-}soll}$ eine Druckgröße parametriert (mit Hilfe eines Kennfelds oder einem anderen Modellierungs- bzw. Berechnungsverfahren), zu der der Umgebungsdruck $p_1$ addiert wird. Die Druckgröße und der hinzuaddierte Umgebungsdruck $p_1$ ergeben einen ersten maximalen Abgasgegendruck $p_{3max1}$. Im unteren Zweig wird unter Berücksichtigung der Differenz aus dem Ladedruck $p_2$ und dem Sollladedruck sowie der Motordrehzahl n ein zweiter maximaler Abgasgegendruck $p_{3max2}$ parametriert (ebenfalls über ein Kennfeld oder eine andere geeignete Modellierung bzw. Berechnung). Dabei ergibt sich der gewünschte maximale Abgasgegendruck $p_3$, aus dem Minimum der beiden Größen erster maximaler Abgasgegendruck $p_{3max1}$ und zweiter maximaler Abgasgegendruck $p_{3max2}$, die im Block 25 ausgewählt werden. Bei der im unteren Zweig parametrisierten Druckgröße, wird die jeweils zulässige maximale Druckdifferenz (Spülgefälle) zwischen Abgasgegendruck $p_3$ und Ladedruck $p_2$ berücksichtigt. Damit ist sichergestellt, dass die nachfolgende Abgasgegendruckbegrenzungsregelung gemäß Fig. 2 auch die Einhaltung des eingestellten zulässigen Spülgefälles beachtet.

Fig. 5 zeigt ein Funktionselement des in Fig. 2 dargestellten Reglers 20, der als Proportionalregler (P-Regler) ausgestaltet ist. Fig. 5 zeigt einen sog. "Gain-Scheduling"-Baustein, der eine maximal zulässige zeitliche Änderung des Abgasgegendrucks ($\dot{p}_{3max}$) ausgibt. Dazu wird die Differenz zwischen dem maximal zulässigen Abgasgegendruck $p_{3max}$ und dem Abgasgegendruck $p_3$ (Ist-Abgasgegendruck) berücksichtigt und EP-Anteil 26 aus dem Motorsollmoment $M_{m\text{-}soll}$ sowie der Motordrehzahl $N_{M\text{-}ist}$ ein Wert parametrisiert wird, der mit einer in einem Regelabweichungskorrekturblock 27 ermittelten Korrekturwert multipliziert wird. Die Regelabweichungskorrektur wird aus der Differenz zwischen dem maximal zulässigen Gegendruck $p_{3max}$ und dem Gegendruck $p_3$ parametriert und ergibt eine Regelverstärkung $K_p$, die mit der Differenz aus den maximal zulässigen Abgasgegendruck $p_{3max}$ und dem Istabgasgegendruck $p_3$ eine maximal zulässige Änderung des Abgasgegendrucks $\dot{p}_{3max}$ ergibt. Aus dieser maximal zulässigen zeitlichen Änderung des Abgasgegendrucks $\dot{p}_{3max}$ wird dann im Linearisierungsteil 21 das VTG-Stellkriterium $u_{max}$ ermittelt. Diese Linearisierung erfolgt entsprechend der oben angegebenen mathematischen Methodik.

Alternativ zu der oben dargestellten Ausführung sind auch Verfahren möglich, bei denen die Limitierung des VTG-Stellkriteriums bzw. der VTG-Position eingesteuert werden. Dabei kann die VTG-Position bei Erreichen eines parametrierten Abgasgegendrucks oder nach Ablauf einer bestimmten Zeit nach einer Laständerungsanforderung (z.B. eine Volllastanforderung) und definiertes Öffnen der VTG-Position mit einer parametrierbaren Rampensteigung in Abhängigkeit von Last und Drehzahl zu einem regulären Ansteuerwert der VTG-Sollposition eingestellt werden.

Es ist auch eine vereinfachte Regelung mit klassischer Struktur realisierbar. Dabei kann eine stationäre Vorsteuerung und ein paralleler linearer Regler, deren Stellanteile addiert werden, genutzt werden. Dabei werden jedoch keine dynamischen Verstärkungseffekte in der Modellinversen berücksichtigt. Die Vorsteuerung kann dabei als Modellinverse oder als Kennfeld mit freier Parametrisierung (z.B. Drehzahl und Last) realisiert werden.

Es können auch andere mathematische Verfahren zum Auflösen der Gleichung für den maximalen Abgasgegendruck ($p_{3max}$) nach dem VTG-Stellkriterium $u_{max}$ (maximal zulässige VTG-Stellung) genutzt werden. Dabei bieten sich z.B. auch iterative Lösungsverfahren an.

Weitere Ausführungen und Variationen der Erfindung ergeben sich für den Fachmann im Rahmen der Ansprüche.

**Bezugszeichenliste**

| | |
|---|---|
| 1 | Kraftfahrzeug |
| 2 | Motor (Verbrennungskraftmaschine) |
| 3 | Aufladungssystem |
| 4 | Zylinder |
| 5 | Aufladungsstufe (Abgasturbinenlader) |
| 6 | Verdichter |
| 7 | Welle |
| 8 | Turbine |
| 9 | Wastegate |
| 10 | Steuerung |
| 11 | Stellmechanismus VTG |
| 12 | Sensor ($p_3$) |
| 12' | weiterer Sensor ($p_2$) |
| $V_{SdT}$ | herkömmlicher Geschwindigkeitsverlauf |
| v | erfindungsgemäße Geschwindigkeitsverlauf |
| $p_{2soll}$ | Sollladedruck |
| $p_{2sdT}$ | herkömmlicher Ladedruckverlauf |
| $p_2$ | Erfindungsgemäßer Ladedruckverlauf |
| $p_{3soll}$ | Sollladedruckverlauf |
| $p_{3SdT}$ | herkömmlicher Abgasgegendruckverlauf |
| $p_3$ | (erfindungsgemäßer) Abgasgegendruck |
| r | VTG-Stellung |
| u | ladedruckabhängige VTG-Position |
| $u_{max}$ | VTG-Stellkriterium/optimierte VTG-Position |
| 20 | Regler |
| 21 | Linearisierungsteil |
| ZG | Zustandsgrößen |
| 22 | Limitierungsteil |
| 23 | Ladedruckregelungsteil |
| 24 | Regelstrecke |
| 25 | Max-Min-Block |
| n | Motordrehzahl |
| $M_{M-soll}$ | Soll-Motordrehmoment |
| $p_1$ | Umgebungsdruck |
| $p_2$ | Ladedruck |
| $p_4$ | Abgasdruck nach der Turbine |
| $T_1$ | Umgebungstemperatur |
| $T_2$ | Ladetemperatur |
| $T_3$ | Abgastemperatur vor der Turbine |
| $T_4$ | Abgastemperatur nach der Turbine |
| $\dot{m}$ | Abgas-/Turbinenmassenstrom |
| 26 | Parametrisierungsblock |
| 27 | Regelabweichungskorrekturblock |
| $K_p$ | Regelverstärkung |

**Patentansprüche**

1. Verfahren zur Steuerung eines Aufladungssystems (3) mit einer Aufladungsstufe (5) für eine Verbrennungskraftmaschine (2), wobei die Aufladungsstufe (5) einen Verdichter (6) und eine Turbine (8) umfasst und die Turbine (8) mittels einer VTG-Ansteuerung (11) einstellbar ist, wobei das Verfahren umfasst:

- Erfassen einer Betriebszustand-Sollgröße ($M_{m\text{-}soll}$)
- Einstellen eines maximalen VTG-Stellkriteriums ($u_{max}$) zur Umsetzung der Drehmomenterhöhung durch eine Erhöhung eines Ladedrucks ($p_2$), wobei das Einstellen des maximalen VTG-Stellkriteriums ($u_{max}$) umfasst:

    - Ermittlung eines Soll-Ladedrucks ($p_{2soll}$)
    - Ermittlung einer VTG-Soll-Stellung ($u_{soll}$) in Abhängigkeit vom Soll-Ladedruck ($p_{2soll}$)
    - Ermittlung eines Ist-Abgasgegendrucks ($p_3$)
    - Ermittlung eines maximalen Abgasgegendrucks ($p_{3max}$)
    - Bestimmung des VTG-Stellkriteriums ($u_{max}$) unter Berücksichtigung der Differenz zwischen dem Ist-Abgasgegendrucks ($p_3$) und dem maximalen Abgasgegendruck ($p_{3max}$), wobei
    - das VTG Stellkriterium ($u_{max}$) die VTG-Soll-Stellung ($u_{soll}$) derart limitiert, dass eine beschleunigte Anpassung eines Ist-Ladedrucks ($p_2$) an den Soll-Ladedruck ($p_{2soll}$) erfolgt gegenüber einer Anpassung des Ist-Ladedrucks ($p_2$) an den Soll-Ladedruck ($p_{2soll}$) ohne Berücksichtigung des VTG Stellkriteriums ($u_{max}$), wobei das VTG Stellkriterium ($u_{max}$) gemäß folgender Beziehung ermittelbar ist:

$$u_{max} = \Delta u_{p3\,Ctl\,max} + \Delta u_{p4} + \Delta u_T + \Delta u_{\dot{m}} + r_{Vtg}$$

mit

$$\Delta u_{p3\,Ctl\,max} = \alpha \cdot \dot{p}_{3max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \, \ddot{m}$$

und

$$\alpha = \frac{\tau}{\left( \dfrac{\partial p_3}{\partial c_d} \cdot \dfrac{\partial c_d}{\partial r} + \dfrac{\partial p_3}{\partial A_{eff}} \cdot \dfrac{\partial A_{eff}}{\partial r} \right)}$$

mit

    $A_{eff}$ effektive Fläche
    $C_d$ Durchflussfaktor
    $K_p$ Verstärkung
    $\dot{m}$ Turbinenmassenstrom
    $\ddot{m}$ zeitliche Ableitung des Turbinenmassenstroms
    $p_3$ Ist- Druck vor der Turbine
    $\dot{p}_3$ zeitliche Ableitung des Ist-Drucks vor der Turbine
    $p_{3max}$ maximaler Abgasgegendruck
    $p_4$ Ist-Druck nach der Turbine
    $\dot{p}_4$ zeitliche Ableitung des Ist-Druck nach der Turbine
    $r_{Vtg}$ Stellgröße (VTG-Position)
    $\dot{r}$ zeitliche Stellgrößenänderung
    $\dot{T}_3$ zeitliche Ableitung der Temperatur vor der Turbine
    $\tau$ Zeitkonstante

2. Verfahren nach Anspruch 1, wobei die Ermittlung des maximalen Abgasgegendrucks ($p_{3max}$) umfasst:

- Parametrierung eines ersten maximalen Abgasgegendrucks ($p_{3max1}$) unter Berücksichtigung einer Betriebszustandsgröße ($n_{M-ist}$), der Betriebszustands-Sollgröße ($M_{M-soll}$) und eines Umgebungsdrucks ($p_1$),
- Parametrierung eines zweiten maximalen Abgasgegendrucks ($p_{3max2}$) unter Berücksichtigung der Betriebszustandsgröße ($n_{M-ist}$) und der Differenz zwischen dem Soll-Ladedruck ($p_{2soll}$) und dem Ist-Ladedruck ($p_2$)
- Festlegen des maximalen Abgasgegendrucks ($p_{3max}$) als Minimum des ersten maximalen Abgasgegendrucks ($p_{3max1}$) und des zweiten maximalen Abgasgegendrucks ($p_{3max2}$).

3. Verfahren nach Anspruch 1 oder 2, wobei der Ist-Ladedruck ($p_2$) und/oder der Ist-Abgasgegendruck ($p_3$) mittels eines Sensors (12, 12') bestimmt wird.

4. Verfahren nach Anspruch 1 oder 2, wobei der Ist-Ladedruck ($p_2$) und/oder der Ist-Abgasgegendruck ($p_3$) ein modellierter Wert ist.

5. Verfahren nach einem der Ansprüche 2 bis 4, wobei die Parametrierung des zweiten maximalen Abgasgegendrucks ($p_{3max2}$) unter Berücksichtigung eines Spülgefälles ($\Delta p_{2,3}$) erfolgt, wobei das Spülgefälle ($\Delta p_{2,3}$) einer Druckdifferenz zwischen Abgasgegendruck ($p_3$) und Ladedruck ($p_2$) entspricht.

6. Verfahren nach Anspruch 5, wobei das Spülgefälle ($\Delta p_{2,3}$) mittels eines Kennfelds bestimmbar ist.

7. Verfahren nach einem der Ansprüche 1 bis 6, wobei das VTG Stellkriterium ($u_{max}$) unter Berücksichtigung einer maximalen Abgasgegendruckänderung ($\dot{p}_{3max}$) erfolgt.

8. Verfahren nach Anspruch 7, wobei die maximale Abgasgegendruckänderung ($\dot{p}_{3max}$) aus einer Parametrierung der Betriebszustandsgröße ($n_{M-ist}$) und der Betriebszustands-Sollgröße ($M_{M-soll}$) bestimmt wird, die entsprechend der Differenz zwischen dem Ist-Abgasgegendrucks ($p_{3ist}$) und dem maximalen Abgasgegendrucks ($p_{3max}$) gewichtet wird.

9. Verfahren nach Anspruch 8, wobei zur Bestimmung der maximalen Abgasgegendruckänderung ($p_{3max}$) ein Korrekturfaktor ($K_p$) berücksichtigt wird, der aus Differenz zwischen dem Ist-Abgasgegendrucks ($p_3$) und dem maximalen Abgasgegendrucks ($p_{3max}$) parametriert wird.

10. Verfahren nach einem der Ansprüche 2 bis 9, wobei die Betriebszustandsgröße eine Motordrehzahl (n) und die Betriebszustand-Sollgröße ein Motorsollmoment ($M_{M-soll}$) ist.

11. Verfahren nach einem der Ansprüche 9 oder 10, wobei bei der Bestimmung des Abgasgegendrucks über eine regelungstechnisch realisierte Ausgangs-/Eingangslinearisierung die folgenden Größen berücksichtigt werden: die Temperatur $T_3$ vor der Turbine, die Ist-Drücke $p_3$, $p_4$, vor und nach der Turbine sowie ein Turbinenmassenstrom m.

12. Steuerung (10) für ein Aufladungssystem (3) für eine Verbrennungskraftmaschine (2), wobei die Steuerung (10) dazu eingerichtet ist, das Verfahren nach einem der vorhergehenden Ansprüche auszuführen.

13. Verbrennungskraftmaschine (2) mit einem Aufladungssystem (3) mit einer Aufladungsstufe (5), wobei die Aufladungsstufe einen Verdichter (6) und eine Turbine (8) aufweist, und mit einer Steuerung (10) nach Anspruch 12.

14. Kraftfahrzeug (1) mit einer Verbrennungskraftmaschine (2) nach Anspruch 13.


**Claims**

1. Method for controlling a charging system (3) with a charging stage (5) for an internal combustion engine (2), wherein the charging stage (5) comprises a compressor (6) and a turbine (8), and the turbine (8) is adjustable by means of a VTG control (11), wherein the method comprises:

- detecting a target operating state variable ($M_{M-target}$)
- setting a maximum VTG position criterion ($u_{max}$) for realizing the increase in torque by increasing a charging pressure ($p_2$), wherein the setting of the maximum VTG position criterion ($u_{max}$) comprises:

- determining a target charging pressure ($p_{2target}$)
- determining a VTG-target position ($u_{target}$) as a function of the target charging pressure ($p_{2target}$)
- determining an actual exhaust gas back pressure ($p_3$)
- determining a maximum exhaust gas back pressure ($p_{3max}$)
- determining the VTG position criterion ($u_{max}$), taking into account the difference between the actual exhaust gas back pressure ($p_3$) and the maximum exhaust gas back pressure ($p_{3max}$), wherein
- the VTG position criterion ($u_{max}$) limits the VTG target position ($u_{target}$) in such a way that an accelerated adaptation of an actual charging pressure ($p_2$) to the target charging pressure ($p_{2target}$) takes place relative to an adaptation of the actual charging pressure ($p_2$) to the target charging pressure ($p_{2target}$), without taking into account the VTG position criterion ($u_{max}$), wherein the VTG position criterion ($u_{max}$) can be determined according to the following relationship:

$$u_{max} = \Delta u_{p3_{Ctl\,max}} + \Delta u_{p4} + \Delta u_T + \Delta u_{\dot{m}} + r_{Vtg}$$

where

$$\Delta u_{p3_{Ctl\,max}} = \alpha \cdot \dot{p}_{3max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \ddot{m}$$

and

$$\alpha = \frac{\tau}{\left(\frac{\partial p_3}{\partial c_d} \cdot \frac{\partial c_d}{\partial r} + \frac{\partial p_3}{\partial A_{eff}} \cdot \frac{\partial A_{eff}}{\partial r}\right)}$$

where

Aeff effective area
$C_d$ flow factor
$K_p$ gain
$m$ turbine mass flow
$\ddot{m}$ time derivative of the turbine mass flow
$p_3$ actual pressure upstream of the turbine
$\dot{p}_3$ time derivative of the actual pressure upstream of the turbine
$p_{3max}$ maximum exhaust gas back pressure
$p_4$ actual pressure after the turbine
$\dot{p}_4$ time derivative of the actual pressure downstream of the turbine
$r_{Vtg}$ manipulated variable (VTG Position)
r change of the manipulated variable over time
$\dot{T}_3$ time derivative of the temperature upstream of the turbine
$T$ time constant

2. Method according to claim 1, wherein the determination of the maximum exhaust gas back pressure ($p_{3max}$) comprises:

- parameterizing a first maximum exhaust gas back pressure ($p_{3max1}$), taking into account an operating state variable ($n_{M\text{-}actual}$), the target operating state variable ($M_{M\text{-}target}$), and an ambient pressure ($p_1$),
- parameterizing a second maximum exhaust gas back pressure ($p_{3max2}$), taking into account the operating state variable ($n_{M\text{-}actual}$) and the difference between the target charging pressure ($p_{2target}$) and the actual charging pressure ($p_2$),
- establishing the maximum exhaust gas back pressure ($p_{3max}$) as a minimum of the first maximum exhaust gas back pressure ($p_{3max1}$) and of the second maximum exhaust gas back pressure ($p_{3max2}$).

3. Method according to claim 1 or 2, wherein the actual charging pressure ($p_2$) and/or the actual exhaust gas back pressure ($p_3$) is determined by means of a sensor (12, 12').

4. Method according to claim 1 or 2, wherein the actual charging pressure ($p_2$) and/or the actual exhaust gas back pressure ($p_3$) is a modeled value.

5. Method according to one of claims 2 through 4, wherein the parameterization of the second maximum exhaust gas back pressure ($p_{3max2}$) takes place under consideration of a purge gradient ($\Delta p_{2,3}$), wherein the purge gradient ($\Delta p_{2,3}$) corresponds to a pressure difference between exhaust gas back pressure ($p_3$) and charging pressure ($p_2$).

6. Method according to claim 5, wherein the purge gradient ($\Delta p_{2,3}$) can be determined by means of a characteristic map.

7. Method according to one of claims 1 through 6, wherein the VTG position criterion ($u_{max}$) takes place under consideration of a maximum exhaust gas back pressure change ($\dot{p}_{3max}$).

8. Method according to claim 7, wherein the maximum exhaust gas back pressure change ($\dot{p}_{3max}$) is determined from a parameterization of the operating state variable ($n_{M\text{-}actual}$) and the target operating state variable ($M_{M\text{-}target}$), which is weighted to correspond to the difference between the actual exhaust gas back pressure ($p_{3actual}$) and the maximum exhaust gas back pressure ($p_{3max}$).

9. Method according to claim 8, wherein a correction factor ($K_p$) which is parameterized from the difference between the actual exhaust gas back pressure ($p_3$) and the maximum exhaust gas back pressure ($p_{3max}$) is taken into account to determine the maximum exhaust gas back pressure change ($\dot{p}_{3max}$),

10. Method according to one of claims 2 through 9, wherein the operating state variable is a motor speed (n), and the target operating state variable is a target motor torque ($M_{M\text{-}target}$).

11. Method according to one of claims 9 or 10, wherein the following variables are taken into account in determining the exhaust gas back pressure via an output/input linearization realized via control engineering: the temperature $T_3$ upstream of the turbine, the actual pressures $p_3$, $p_4$ upstream and downstream of the turbine, and a turbine mass flow $\dot{m}$.

12. Controller (10) for a charging system (3) for an internal combustion engine (2), wherein the controller (10) is configured to execute the method according to one of the preceding claims.

13. Internal combustion engine (2) with a charging system (3) having a charging stage (5), wherein the charging stage has a compressor (6) and a turbine (8), and having a controller (10) according to claim 12.

14. Motor vehicle (1) having an internal combustion engine (2) according to claim 13.

**Revendications**

1. Procédé de commande d'un système de charge (3) comprenant un étage de charge (5) pour un moteur à combustion interne (2), l'étage de charge (5) comprenant un compresseur (6) et une turbine (8) et la turbine (8) pouvant être réglée au moyen d'une commande VTG (11), le procédé comprenant :

- la détection d'une grandeur de consigne d'état de fonctionnement ($M_{M\text{-}soll}$)
- le réglage d'un critère de réglage de VTG maximal ($u_{max}$) pour la transposition de l'augmentation de couple par une augmentation d'une pression de suralimentation ($p_2$), le réglage du critère de réglage de VTG maximal

($u_{max}$) comprenant :

- la détermination d'une pression de suralimentation de consigne ($p_{2soll}$)
- la détermination d'une position de VTG de consigne ($u_{soll}$) en fonction de la pression de suralimentation de consigne ($p_{2soll}$)
- la détermination d'une contre-pression de gaz d'échappement réelle ($p_3$)
- la détermination d'une contre-pression de gaz d'échappement maximale ($p_{3max}$)
- la détermination du critère de réglage de VTG ($u_{max}$) en tenant compte de la différence entre la contre-pression de gaz d'échappement réelle ($p_3$) et la contre-pression de gaz d'échappement maximale ($p_{3max}$),
- le critère de réglage de VTG ($u_{max}$) limitant la position de VTG de consigne ($u_{soll}$) de telle façon qu'une adaptation accélérée d'une pression de suralimentation réelle ($p_2$) à la pression de suralimentation de consigne ($p_{2soll}$) se produise par rapport à une adaptation de la pression de suralimentation réelle ($p_2$) à la pression de suralimentation de consigne ($p_{2soll}$) sans prise en compte du critère de réglage de VTG ($u_{max}$), le critère de réglage de VTG ($u_{max}$) pouvant être déterminé selon la relation suivante :

$$u_{max} = \Delta u_{p3_{Ctl\,max}} + \Delta u_{p4} + \Delta u_T + \Delta u_{\dot{m}} + r_{Vtg}$$

avec

$$\Delta u_{p3_{Ctl\,max}} = \alpha \cdot \dot{p}_{3max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \ddot{m}$$

et

$$\alpha = \frac{\tau}{\left(\dfrac{\partial p_3}{\partial c_d} \cdot \dfrac{\partial c_d}{\partial r} + \dfrac{\partial p_3}{\partial A_{eff}} \cdot \dfrac{\partial A_{eff}}{\partial r}\right)}$$

avec

$A_{eff}$ surface effective
$C_d$ coefficient de débit
$K_p$ gain
$\dot{m}$ débit massique de la turbine
$\ddot{m}$ dérivée de temps du débit massique de la turbine
$p_3$ pression réelle en amont de la turbine
$\dot{p}_3$ dérivée de temps de la pression réelle en amont de la turbine
$p_{3max}$ contre-pression de gaz d'échappement maximale
$p_4$ pression réelle en aval de la turbine
$\dot{p}_4$ dérivée de temps de la pression réelle en aval de la turbine
rvtg grandeur de réglage (position de VTG)
$\dot{r}$ changement temporel de la grandeur de réglage
$\dot{T}_3$ dérivée de temps de la température en amont de la turbine
$\tau$ constante de temps

**2.** Procédé selon la revendication 1, la détermination de la contre-pression de gaz d'échappement maximale ($p_{3max}$) comprenant :

- la paramétrisation d'une première contre-pression de gaz d'échappement maximale ($p_{3max1}$) en prenant en compte une grandeur d'état de fonctionnement ($n_{M-ist}$), la grandeur d'état de fonctionnement de consigne($M_{M-soll}$) et une pression ambiante($p_1$),
- la paramétrisation d'une seconde contre-pression de gaz d'échappement maximale ($p_{3max2}$) en prenant en compte la grandeur d'état de fonctionnement ($n_{M-ist}$) et la différence entre la pression de suralimentation de consigne ($p_{2soll}$) et la pression de suralimentation réelle ($p_2$)
- la définition de la contre-pression de gaz d'échappement maximale ($p_{3max}$) comme le minimum de la première contre-pression de gaz d'échappement maximale ($p_{3max1}$) et de la seconde contre-pression de gaz d'échappement maximale ($p_{3max2}$).

**3.** Procédé selon la revendication 1 ou 2, la pression de suralimentation réelle ($p_2$) et/ou la contre-pression de gaz-d'échappement réelle ($p_3$) étant déterminées au moyen d'un capteur (12, 12').

**4.** Procédé selon la revendication 1 ou 2, la pression de suralimentation réelle ($p_2$) et/ou la contre-pression de gaz-d'échappement réelle ($p_3$) étant des valeurs modelées.

**5.** Procédé selon l'une quelconque des revendications 2 à 4, la paramétrisation de la seconde contre-pression de gaz d'échappement maximale ($p_{3max2}$) s'effectuant en prenant compte un gradient de récupération ($\Delta p_{2,3}$), le gradient de récupération ($\Delta p_{2,3}$) correspondant à une différence de pression entre la contre-pression de gaz d'échappement ($p_3$) et la pression de suralimentation ($p_2$).

**6.** Procédé selon la revendication 5, le gradient de récupération ($\Delta p_{2,3}$) pouvant être déterminé au moyen d'un champ caractéristique.

**7.** Procédé selon l'une quelconque des revendications 1 à 6, le critère de réglage de VTG ($u_{max}$) s'effectuant en prenant en compte un changement maximal de contre-pression de gaz d'échappement ($\dot{p}_{3max}$).

**8.** Procédé selon la revendication 7, le changement maximal de contre-pression de gaz d'échappement ($\dot{p}_{3max}$) étant déterminé à partir d'une paramétrisation de la grandeur d'état de fonctionnement ($n_{M-ist}$) et de la grandeur d'état de fonctionnement de consigne ($M_{M-soll}$), qui est pondérée de manière correspondant à la différence entre la contre-pression de gaz d'échappement réelle ($p_{3ist}$) et la contre-pression de gaz d'échappement maximale ($p_{3max}$).

**9.** Procédé selon la revendication 8, lors de la détermination du changement maximal de contre-pression de gaz d'échappement ($\dot{p}_{3max}$) un facteur de correction ($K_p$) étant pris en compte, lequel est paramétrisé à partir de la différence entre la contre-pression de gaz d'échappement réelle ($p_3$) et la contre-pression de gaz d'échappement maximale ($p_{3max}$).

**10.** Procédé selon l'une quelconque des revendications 2 à 9, la grandeur d'état de fonctionnement étant une vitesse du moteur (n) et la grandeur d'état de fonctionnement de consigne étant un couple de moteur de consigne ($M_{M-soll}$).

**11.** Procédé selon l'une quelconque des revendications 9 ou 10, lors de la détermination de la contre-pression de gaz d'échappement au moyen d'une linéarisation de la sortie/entrée réalisée par la technique de régulation, les grandeurs suivantes étant prises en compte : la température $T_3$ en amont de la turbine, les pressions réelles $p_3$, $p_4$, en amont et en aval de la turbine ainsi qu'un débit massique de turbine m.

**12.** Commande (10) pour un système de charge (3) pour un moteur à combustion interne (2), la commande (10) étant conçue pour exécuter le procédé selon l'une quelconque des revendications précédentes.

**13.** Moteur à combustion interne (2) comprenant un système de charge (3) comprenant un étage de charge (5), l'étage de charge présentant un compresseur (6) et une turbine (8) et comprenant une commande (10) selon la revendication 12.

**14.** Véhicule automobile (1) comprenant un moteur à combustion interne (2) selon la revendication 13.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008005121 A1
- EP 1178192 A2
- DE 102008063935 A1
- DE 102014210026 A1
- US 5228292 A

**In der Beschreibung aufgeführte Nicht-Patentliteratur**

- **SCHOLLMEYER.** Beitrag zur modellbasierten Ladedruckregelung für Pkw-Dieselmotoren zurückgegriffen und das. *Verfahren der Ein-/ Ausgangslinearisierung (E/A-Linearisierun) gemäß*
- **ISIDORI.** *Nonlinear Control Systems,* 1995